(19) Europäisches Patentamt
European Patent Office
Office européen des brevets

(11) **EP 3 811 199 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **19728587.7**

(22) Anmeldetag: **21.05.2019**

(51) Internationale Patentklassifikation (IPC):
*G06F 7/483* (2006.01)

(52) Gemeinsame Patentklassifikation (CPC):
**G06F 7/4833**

(86) Internationale Anmeldenummer:
**PCT/EP2019/063119**

(87) Internationale Veröffentlichungsnummer:
**WO 2019/242968 (26.12.2019 Gazette 2019/52)**

(54) **RECHENEINHEIT, VERFAHREN UND COMPUTERPROGRAMM ZUM MULTIPLIZIEREN ZUMINDEST ZWEIER MULTIPLIKANDEN**

COMPUTING UNIT, METHOD AND COMPUTER PROGRAM FOR MULTIPLYING AT LEAST TWO MULTIPLICANDS

UNITÉ DE CALCUL, PROCÉDÉ ET PROGRAMME INFORMATIQUE POUR LA MULTIPLICATION D'AU MOINS DEUX MULTIPLICANDES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2018 DE 102018209901**

(43) Veröffentlichungstag der Anmeldung:
**28.04.2021 Patentblatt 2021/17**

(73) Patentinhaber: **Robert Bosch GmbH**
**70442 Stuttgart (DE)**

(72) Erfinder: **VOGEL, Sebastian**
**76744 Schaidt (DE)**

(56) Entgegenhaltungen:
**US-A- 4 555 768**

• **Mark G Arnold ET AL: "On the Cost Effectiveness of Logarithmic Arithmetic for Back Propagation Training on SIMD Processors", Proceedings of ICNN '97, 1. Juni 1997 (1997-06-01), XP055609759, Gefunden im Internet:**
**URL:https://ieeexplore.ieee.org/ielx3/4831/13415/00616150.pdf?tp=&arnumber=616150&isnumber=13415&ref=aHR0cHM6Ly93d3cuZ29vZ2xIL mNvbS8= [gefunden am 2019-07-30]**
• **Chuan Zhang Tang ET AL: "Multilayer Feedforward Neural Networks with Single Powers-of-Two Weights", IEEE TRANSACTIONS ON SIGNAL PROCESSING, vol. 41, nr. 8, 1. August 1993 (1993-08-01), Seiten 484-487, XP055503286, Gefunden im Internet:**
**URL:https://ieeexplore.ieee.org/ielx4/78/5934/00229903.pdf?tp=&arnumber=229903&isnu m ber=5934 [gefunden am 2018-08-30]**

**Beschreibung**

Technisches Gebiet

Die Erfindung betrifft eine Recheneinheit zum Multiplizieren zumindest zweier Multiplikanden mittels bitweisen Verschiebens. Ebenso betrifft die Erfindung ein Verfahren zum Multiplizieren zumindest zweier Multiplikanden mittels bitweisen Verschiebens, ein Computerprogramm, das eingerichtet ist, das Verfahren auszuführen und ein maschinenlesbares Speicherelement, auf dem das Computerprogramm hinterlegt ist.

Stand der Technik

Die DE 10 2013 220 432 A1 offenbart eine Modellberechnungseinheit für einen integrierten Steuerbaustein, der durch rein hardwarebasierte Implementierung mit einer Exponentialfunktion, Summierfunktionen und Multiplikationsfunktionen in mindestens einer inneren und einer äußeren Schleife versehen ist, um ein datenbasiertes Funktionsmodell, insbesondere ein Gauß-Prozess-Modell, zu berechnen.

Offenbarung der Erfindung

In einem ersten Aspekt betrifft die Erfindung eine Recheneinheit gemäß dem unabhängigen Anspruch 1. Die Recheneinheit ist eingerichtet, eine Multiplikation zumindest zweier Multiplikanden durchzuführen. Die Multiplikanden weisen jeweils einen ersten Exponenten und eine erste Basis auf. Die Multiplikanden, insbesondere die ersten Basen, weisen jeweils eine zweite Basis, einen zweiten und einen dritten Exponenten auf.
Die Recheneinheit umfasst unter anderem folgende Merkmale:
Zumindest eine Bitshift Einheit, die eine binäre Zahl um eine vorgebbare Anzahl an Stellen, insbesondere nach links, verschiebt. Des Weiteren umfasst die Recheneinheit eine Arithmetische Einheit, die eine Addition zweier Eingangsgrößen und eine Subtraktion zweier Eingangsgrößen ausführt sowie einen Speicher. Der Speicher kann ein Register oder eine Look-Up-Tabel sein.
Die Arithmetische Einheit und die Bitshift Einheit sind derart miteinander verbunden, dass die Arithmetische Einheit zuerst eine Subtraktion der dritten Exponenten ausführt.
Die Arithmetische Einheit und die Bitshift Einheit der Recheneinheit sind ferner miteinander verbunden, sodass die Bitshift Einheit ein erstes Verschieben einer binären Zahl einer der ersten Exponenten der Multiplikanden um eine Anzahl der Stellen eines Wertes der subtrahierten Exponenten ausführt, sodass die Arithmetische Einheit eine Addition des Ergebnisses des ersten Verschiebens mit dem weiteren ersten Exponenten der Multiplikanden ausführt.
Das Ergebnis der Addition wird in einen ganzzahligen Anteil (engl. integer part) und einen Nachkommastellen-Anteil (engl. fractional part) abhängig von einem Wert des kleineren Exponenten der dritten Exponenten aufgeteilt.
Das Aufteilen in den ganzzahligen Anteil (engl. integer part) und den Nachkommastellen-Anteil (engl. fractional part) kann mittels eines Verschiebens des Ergebnisses der Addition um die Anzahl der Stellen des Werts des kleineren Exponenten der dritten Exponenten erfolgen, denn bei diesem Verschieben wird das Komma des Ergebnisses der Addition verschoben, welches die Aufteilung in die jeweiligen Anteile bestimmt.
Aus dem Speicher wird dann eine binäre Zahl des Nachkommastellen-Anteils ausgelesen.
Die binäre Zahl des Nachkommastellen-Anteils ist vorzugsweise eine potenzierte binäre Zahl des Nachkommastellen-Anteils, insbesondere eine binäre Zahl einer Potenz des ermittelten Nachkommastellen-Anteils zur Basis 2.
Die Bitshift Einheit führt anschließend ein zweites Verschieben der binären Zahl des Nachkommastellen-Anteils um die Anzahl der Stellen des Wertes des ganzzahligen Anteils aus.
Der Nachkommastellen-Anteils kann als eine Adresse für ein Lesen aus dem Speicher genutzt werden.
Unter einem Nachkommastellen-Anteil wird der Teil einer Zahl verstanden, welcher nach einem Dezimalpunkt oder Binärpunkt oder Komma folgt. Der ganzzahlige Anteil ist demnach der Teil der Zahl der entsprechend vor dem Dezimalpunkt ist. Alternativ kann auch unter dem ganzzahligen Anteil eine ganze Zahl des Teils der Zahl entsprechend vor dem Dezimalpunkt verstanden werden.
Die Recheneinheit hat den Vorteil, dass die Multiplikation mittels Verschiebens binärer Zahlen der Exponenten der Multiplikanden ausgeführt wird und das Verschieben von binären Zahlen in Hardware besonders ressourcen- und energieeffizient ausgeführt werden kann. Ferner kann die Recheneinheit auf einer kleineren Chipfläche implementiert werden, da auf ein komplexes hardwareimplementiertes Multiplikationswerk (z.B. ein Gleitkommamultiplizierer oder ein Festkommamultiplizierer) verzichtet werden kann. Des Weiteren ist die Recheneinheit energiesparsamer, da die benötigten Operationen zum Verschieben der binären Zahlen beim Ausführen der Multiplikation weniger Energie als ein komplexes Multiplikationswerk verbrauchen. Deshalb geht die Recheneinheit besonders sparsam mit den Ressourcen, die zum Ausführen der Multiplikation benötigt werden, wie Energie, Rechenzeit und Chipfläche, um.
Des Weiteren kann im ersten Aspekt der Erfindung das Verschieben jeweils bitweise ausgeführt werden.

Ferner kann im ersten Aspekt der Erfindung vorgesehen sein, dass die Bitshift Einheit das erste Verschieben mittels eines rechtsseitigen Auffüllens mit einer Mehrzahl von "0", insbesondere desjenigen Exponenten, der einem größeren der dritten Exponenten entspricht, abhängig von einem Wert der Subtraktion der dritten Exponenten ausführt. Zweckgemäß repräsentieren die Mehrzahl der "0" jeweils den binären Wert "0". Dieses Vorgehen wird im Folgenden als ein Bit-Adjustment bezeichnet.

Der Vorteil hierbei ist, dass bei unterschiedlicher Auflösung der ersten Exponenten (d.h. unterschiedlicher Fixpunkt-Darstellung), deren binäre Darstellungen aufeinander abgestimmt werden können, sodass bspw. das nachfolgende Addieren der binären Zahlen direkt ausgeführt werden kann.

Weiterhin kann vorgesehen sein, dass der Speicher zumindest $2^n$ Einträge aufweist, wobei $n$ gleich des Betrags des kleineren Exponenten der dritten Exponenten ist. Vorzugsweise sind in dem Speicher für jeweils alle möglichen unterschiedlichen Werte, die der kleinere Exponent der dritten Exponenten aufweisen kann, jeweils ein Eintrag hinterlegt, der einem Ergebnis des potenzierten Nachkommastellen-Anteils entspricht. Der Nachkommastellen-Anteil kann als Adresse zum Auslesen der jeweiligen binären Zahl aus dem Speicher verwendet werden.

Der Vorteil hierbei ist, dass durch einen Speicherzugriff die binäre Zahl des potenzierten Nachkommastellen-Anteiles ermittelt wird, wodurch keine Exponentialrechnungen in Hardware ausgeführt werden müssen, die sehr rechenaufwändig sind.

Des Weiteren kann vorgesehen sein, dass die Recheneinheit eine Akkumulationseinheit umfasst, welche Ergebnisse einer Mehrzahl der Multiplikationen von jeweils zumindest zweier Multiplikanden akkumuliert.

Der Vorteil ist, dass hiermit z.B. Matrix-Vektor Multiplikationen oder Faltungen, die u.a. beim Betreiben eines maschinellen Lernsystems auftreten und zu deren Ermittlung Multiplikationen gefolgt von Additionen ausgeführt werden, besonders ressourcensparend ausgeführt werden können. Denn die Ergebnisse der jeweiligen Multiplikationen müssen nicht einzeln zwischengespeichert und anschließend aufsummiert werden, sondern können direkt akkumuliert werden. Es kann eine Umrecheneinheit, insbesondere ein Prioritätsencoder, vorgesehen sein, welcher das Ergebnis der Multiplikation in eine Exponentialdarstellung umwandelt. In der Exponentialdarstellung wird eine Zahl mittels eines ersten Exponenten und einer ersten Basis dargestellt. Die erste Basis kann einen vorgegebenen Wert aufweisen. Denkbar ist auch, dass in der Exponentialdarstellung die Zahl wiederum eine zweite Basis, einen zweiten und dritten Exponenten aufweist.

Die Umwandlung in die Exponentialdarstellung ist vorteilhaft, da das Ergebnis in einem geeigneten Format vorliegt, um das Ergebnis wieder als Multiplikand der Recheneinheit bereitstellen zu können.

In einem zweiten Aspekt wird ein Verfahren zum Multiplizieren zumindest zweier Multiplikanden auf einer Recheneinheit vorgestellt. Die Multiplikanden weisen jeweils einen ersten Exponenten und eine erste Basis auf. Die Multiplikanden, insbesondere die ersten Basen, weisen jeweils eine zweite Basis, einen zweiten und einen dritten Exponenten auf.

Das Verfahren umfasst unter anderem folgende Schritte:
Zuerst werden die ersten Exponenten der Multiplikanden und die dritten Exponenten bereitgestellt. Jeder der bereitgestellten Exponenten ist quantisiert, insbesondere eine binäre Zahl.

Daraufhin werden die dritten Exponenten voneinander subtrahiert. Danach wird ein erstes Verschieben einer binären Zahl einer der ersten Exponenten der Multiplikanden um eine Anzahl der Stellen eines Wertes der subtrahierten Exponenten ausgeführt. Anschließend wird das Ergebnis des ersten Verschiebens mit dem weiteren ersten Exponenten der Multiplikanden addiert. Das Ergebnis der Addition wird in einen ganzzahligen Anteil (engl. integer part) und einen Nachkommastellen-Anteil (engl. fractional part) abhängig von einem Wert des kleineren Exponenten der dritten Exponenten aufgeteilt.

Diese Aufteilung kann auch durch ein Verschieben des Ergebnisses der Addition um eine Anzahl an Stellen abhängig von dem Wert des kleineren Exponenten der dritten Exponenten erfolgen.

Danach wird ein zweites Verschieben einer binären Zahl des Nachkommastellen-Anteils um die Anzahl der Stellen des Wertes des ganzzahligen Anteils durchgeführt.

Die einzelnen Schritte werden vorzugsweise mittels eines Prozessors oder einer Arithmetischen Einheit (engl. arithmetic logic unit, ALU) der Recheneinheit ausgeführt. Vorteilhafterweise wird zumindest das erste Verschieben mittels einer Bitshift Einheit oder mittels eines Bit-Adjustments und das zweite Verschieben mittels der Bitshift Einheit ausgeführt.

Der Vorteil des zweiten Aspektes der Erfindung ist, dass mittels dieses Verfahrens Multiplikationen ressourcenschonend auf der Recheneinheit ausgeführt werden können.

Ferner wird vorgeschlagen, dass das Verschieben jeweils bitweise ausgeführt wird.

Im zweiten Aspekt kann vorgesehen sein, dass die binäre Zahl des Nachkommastellen-Anteils aus einem Speicher, insbesondere einem Register oder einer Look-Up-Tabel, ausgelesen wird. Der Nachkommastellen-Anteil kann hierfür als Adresse des Speichers zum Auslesen der binären Zahl des Nachkommastellen-Anteils verwendet werden.

Ferner kann vorgesehen sein, dass das Ergebnis des zweiten Verschiebens in einen Exponenten und eine vorgebbare Basis zerlegt wird, insbesondere in die Exponentialdarstellung umgewandelt wird.

Dies erlaubt ein einfaches Wiederverwenden des Ergebnisses für eine erneute Multiplikation mittels des Verfahrens nach dem zweiten Aspekt der Erfindung. Ein weiterer Vorteil ist, dass mittels der Exponentialdarstellung das Ergebnis weniger Speicherplatz in Anspruch nimmt, da die Exponenten stärker quantisiert werden können als das Ergebnis als solches. Dadurch kann auch eine Reduktion des benötigten Speicherplatzes beim Ausführen des Verfahrens erreicht werden.

Vorteilhaft ist, wenn die zweiten Basen und die zweiten Exponenten jeweils den Wert zwei aufweisen, da die Zweierpotenz eine einfache Rekonstruktion aus einem gegebenen Exponenten und Basis des Multiplikanden erlaubt. Darüber hinaus besitzt die Zweierpotenz eine hohe Hardwareaffinität, wodurch sich das Verfahren besonders einfach in Hardware, insbesondere mittels des bitweisen Verschiebens, abbilden lässt.

Weiterhin wird vorgeschlagen, dass die bereitgestellten Exponenten mittels maximal 10 Bit dargestellt werden. Dies führt zu einer starken Speicherreduktion und auch zu einer starken Reduktion der benötigten Speicherbandbreite.

Vorteilhaft hieran ist, dass eine signifikante Speicherplatzreduktion erzielt werden kann. Denn die üblicherweise mit mindestens 32 Bit gespeicherten Multiplikanden können ohne einen signifikanten Genauigkeitsverlust im Ergebnis der Multiplikation, anhand jeweils mittels nur 10 Bit pro Exponent, gespeichert werden. Dies führt zu einer starken Reduktion des Speicheraufwandes zum Speichern der einzelnen Multiplikanden.

In einem weiteren Aspekt der Erfindung wird ein Verfahren zum Betreiben eines maschinellen Lernsystems vorgestellt. Eine Mehrzahl von Parametern und Zwischengrößen des maschinellen Lernsystems, die üblicherweise während des Betriebs des maschinellen Lernsystem als Multiplikanden verwendet werden, sind jeweils mittels der Exponentialdarstellung in einem, insbesondere weiteren, Speicher hinterlegt. Multiplikationen dieser Multiplikanden werden nach einem der Verfahren des zweiten Aspektes der Erfindung ausgeführt.

In einem maschinellen Lernsystem können die Parameter und die Zwischengrößen miteinander multipliziert werden. Unter einer Zwischengröße wird ein ermitteltes Zwischenergebnis des maschinellen Lernsystems verstanden. Das Zwischenergebnis kann in Abhängigkeit einer Mehrzahl der Parameter des maschinellen Lernsystems und in Abhängigkeit einer Eingangsgröße und/oder eines vorherigen ermittelten Zwischenergebnisses ermittelt werden. Das Zwischenergebnis kann mittels des maschinellen Lernsystems weiterverarbeitet werden, häufig bis, abhängig von dem Zwischenergebnis, das maschinelle Lernsystem eine Ausgangsgröße ermittelt hat.

Da in einem maschinellen Lernsystem eine Grundrechenoperation die Multiplikation ist und diese sehr häufig beim Betreiben des maschinellen Lernsystems ausgeführt wird, kann mittels des Verfahren nach dem zweiten Aspekt der Erfindung eine signifikante Steigerung der Rechenleistungseffizienz und Rechengeschwindigkeit der Recheneinheit erreicht werden, wodurch auch das maschinelle Lernsystem leistungsfähiger wird.

Es kann vorgesehen sein, dass eine Mehrzahl der Ergebnisse der Multiplikationen akkumuliert werden, insbesondere mittels eines Akkumulators. Denn neben den Multiplikationen werden beim Betreiben des maschinellen Lernsystems häufig Additionen ausgeführt, wodurch mittels der Akkumulation der Ergebnisse die Additionen und folglich die Berechnungen des maschinellen Lernsystems besonders rechen- und zeiteffizient auf der Recheneinheit ausgeführt werden können. Damit kann zusätzlich die Leistungsfähigkeit des maschinellen Lernsystems gesteigert werden.

In dem weiteren Aspekt kann vorgesehen sein, dass bei einem Anlernen des maschinellen Lernsystems zumindest die Basen der Exponentialdarstellung der Zwischengrößen und der Parameter ermittelt werden.

Der Vorteil ist, dass bereits beim Anlernen geeignete Basen der Multiplikanden ermittelt werden, wodurch das maschinelle Lernsystem während des Anlernens die Exponentialdarstellung beim Ermitteln der Parameter des maschinellen Lernsystems berücksichtigen kann.

Unter einem Anlernen des maschinellen Lernsystem wird verstanden, dass das maschinelle Lernsystem anhand von bereitgestellten Trainingsdaten lernt, eine vorgebbare Aufgabe zu lösen, bspw. eine Eingangsgröße wie ein erfasstes Bild zu klassifizieren oder zu segmentieren.

Alternativ kann vorgesehen sein, dass nach dem Anlernen des maschinellen Lernsystems zumindest die Basen für die Exponentialdarstellung der Zwischengrößen und der Parameter des maschinellen Lernsystems ermittelt werden.

Der Vorteil ist, dass kein erneutes Anlernen mit den umgewandelten Parametern durchgeführt werden muss, da ein Wert der ersten Basen beliebig gewählt werden kann. Es hat sich für maschinelle Lernsysteme als besonders vorteilhaft herausgestellt, wenn die ersten Basen zumindest der Parameter des maschinellen Lernsystems einen Wert kleiner 2 aufweisen, wodurch ein erneutes Anlernen nicht durchgeführt werden muss.

Ferner kann vorgesehen sein, dass die Basen abhängig von einem propagierten Quantisierungsfehler ermittelt werden. Der propagierte Quantisierungsfehler charakterisiert eine Differenz des Ergebnisses der Multiplikation zweier Multiplikanden mit quantisierten Exponenten zu einem Ergebnis der Multiplikation dieser zwei Multiplikanden, vorzugsweise mit reellen Exponenten respektive mit hochauflösend quantisierten Exponenten, beispielsweise 32 Bit quantisierten Exponenten.

Liegt eine Zahl in der Exponentendarstellung vor und ist der Exponent quantisiert, wird im Folgenden von einer quantisierten Exponentendarstellung gesprochen. Der Vorteil des propagierten Quantisierungsfehlers ist, dass nur Eingangstrainingsdaten benötigt werden, welche nicht mit Labels und Attributen versehen wurden.

Alternativ kann der propagierte Quantisierungsfehler eine Differenz eines Ergebnisses mit und ohne Quantisierung einer (un-)mittelbar nachfolgenden Multiplikation charakterisieren. Ein Multiplikand einer unmittelbar nachfolgenden Multiplikation ist hierbei das Ergebnis der Multiplikation der Multiplikanden in quantisierter Exponentialdarstellung, wobei eine zumindest erste Basis einer der Multiplikanden in der Exponentialdarstellung ermittelt wird.

Ein Multiplikand einer mittelbar nachfolgenden Multiplikation ist hierbei abhängig von dem Ergebnis der Multiplikation der Multiplikanden in quantisierter Exponentialdarstellung, wobei eine erste Basis einer der Multiplikanden in der Exponentialdarstellung ermittelt wird.

Insbesondere wird die (un-)mittelbar nachfolgende Multiplikation ebenfalls mit quantisierten oder reellen Exponenten durchgeführt.

Wenn das maschinelle Lernsystem ein tiefes neuronales Netz umfasst, dann kann der propagierte Quantisierungsfehler eine Differenz einer Zwischengröße einer un-/mittelbar nachfolgenden Schicht des tiefen neuronalen Netzes charakterisieren. Die Zwischengröße ist hierbei abhängig von zumindest dem Multiplikanden, dessen erste Basis ermittelt wird.

Des Weiteren kann vorgesehen sein, dass die Exponenten abhängig von der ermittelten Basis der Exponentialdarstellung ermittelt werden und diese ermittelten Exponenten quantisiert, insbesondere in eine binäre Zahl umgewandelt, werden. Beim Quantisieren der Exponenten, bzw. Umwandeln der Exponenten in eine binäre Zahl, wird beginnend bei einer initialen Auflösung der Exponenten mittels 10 Bit, schrittweise die Auflösung um jeweils ein Bit reduziert, dann wenn eine einen Quantisierungsfehler charakterisierende Größe kleiner als eine vorgebbare Größe ist. Es sei angemerkt, dass die initiale Auflösung beliebig zwischen zumindest 5 Bit und mehr als 30 Bit gewählt werden kann. Es hat sich als vorteilhaft für maschinelle Lernsysteme herausgestellt, mit 10 Bit zu beginnen, da hierbei ein zügiges Auffinden einer optimalen Auflösung erzielt wird, ohne bereits zu Beginn einen ungenauen Exponenten zu erhalten.

In einem weiteren Aspekt der Erfindung wird vorgeschlagen, dass die Eingangsgröße des maschinellen Lernsystems eine Größe ist, welche mittels eines Sensors erfasst wurde. Abhängig von einer Ausgangsgröße des maschinellen Lernsystems kann eine Steuergröße ermittelt werden.

Die Steuergröße kann zum Steuern eines Aktors eines technischen Systems verwendet werden. Das technische System kann zum Beispiel eine zumindest teilautonome Maschine, ein zumindest teilautonomes Fahrzeug, ein Roboter, ein Werkzeug, eine Werkmaschine oder ein Flugobjekt wie eine Drohne sein. Beispielsweise kann eine Bewegung des Roboters oder Fahrzeugs gesteuert werden oder eine Steuerung des Aktors anhand der Steuergröße erfolgen.

Die Eingangsgröße kann alternativ bspw. abhängig von erfassten Sensordaten ermittelt und dem maschinellen Lernsystem bereitgestellt werden. Die Sensordaten können von einem Sensor, wie z.B. einer Kamera, des technischen Systems erfasst oder von extern empfangen werden.

In einem weiteren Aspekt der Erfindung wird ein Computerprogramm vorgeschlagen. Das Computerprogramm ist eingerichtet, eines der vorherigen genannten Verfahren auszuführen. Das Computerprogramm umfasst Anweisungen, die einen Computer veranlassen, eines dieser genannten Verfahren mit all seinen Schritten auszuführen, wenn das Computerprogramm auf dem Computer abläuft. Ferner wird ein maschinenlesbares Speichermodul vorgeschlagen, auf welchem das Computerprogramm gespeichert ist.

In einem weiteren Aspekt der Erfindung wird ein Erzeugnis vorgeschlagen, welches durch Ausführen eines der Verfahrens des zweiten Aspektes umfassend zumindest das Anlernen des maschinellen Lernsystems erhältlich ist.

Ausführungsbeispiele der oben genannten Aspekte sind in den beiliegenden Zeichnungen dargestellt und in der nachfolgenden Beschreibung näher erläutert. Dabei zeigen:

**Kurze Beschreibung der Zeichnungen**

Fig. 1    eine schematische Darstellung eines Verfahrens zum Ermitteln einer Multiplikation zweier Multiplikanden mittels bitweisen Verschiebens;
Fig. 2    eine schematische Darstellung eines Verfahrens zum Ermitteln von Basen der Multiplikanden für ein maschinelles Lernsystem;
Fig. 3    eine schematische Darstellung eines Verfahrens zum Betreiben des maschinellen Lernsystems;
Fig. 4    eine schematische Darstellung einer Ausführungsform einer Recheneinheit zum Ermitteln einer Multiplikation zweier Multiplikanden mittels bitweisen Verschiebens;
Fig. 5    eine schematische Darstellung einer Ausführungsform einer Vorrichtung, welche zum Anlernen des maschinellen Lernsystems verwendet werden kann.
Fig. 6    eine schematische Darstellung einer Ausführungsform eines teilautonomen Fahrzeugs, welches das maschinelle Lernsystem umfasst.

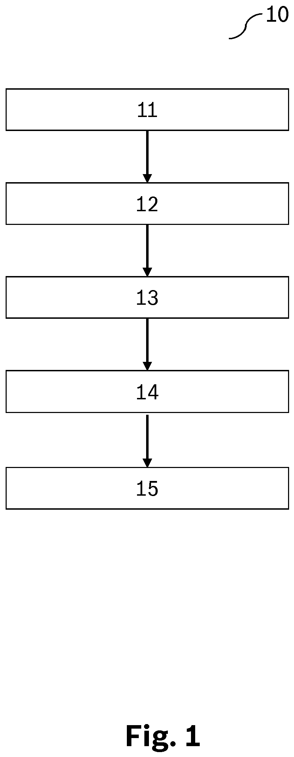

Die Figur 1 zeigt eine schematische Darstellung eines Verfahrens (10) zum Multiplizieren zweier Multiplikanden. Das Verfahren verwendet unter anderem die mathematische Eigenschaft, dass eine Multiplikation eines Multiplikanden *a* mit einem weiteren Multiplikanden b im Binärsystem durch eine bitweise Verschiebung (engl. Bitshift) durchgeführt werden kann, wenn b mittels einer Exponentialdarstellung, hier als Zweierpotenzen, b = $2^{\hat{b}}$ dargestellt werden kann.

Die Multiplikation kann dann durch eine bitweise Verschiebung einer binären Zahl der Multiplikanden *a* nach links um $\hat{b}$ Stellen ermittelt werden:

$$a \cdot b = a \ll \hat{b} \qquad (1)$$

Der Operator « bezeichnet einen Bitshift nach links des Multiplikanden *a* im Binärsystem um die Anzahl der Stellen des Wertes $\hat{b}$.

Für den Fall, dass der Multiplikand *a* ebenfalls mit einer Zweierpotenz a = $2^{\hat{a}}$ dargestellt werden kann, dann gilt:

$$a \cdot b = 1 \ll (\hat{a} + \hat{b}) \qquad (2)$$

Es sei angemerkt, dass die Umrechnung der Multiplikanden *a* und b in die Exponentialdarstellung dazu führt, dass zur Speicherung dieser Werte nur der Exponent $\hat{a}$, $\hat{b}$ gespeichert werden muss, der mittels weniger Bit als der ursprüngliche Multiplikand *a*, *b* abgespeichert werden kann. Vorzugsweise werden die Multiplikanden *a*, *b* mit 32 Bit abgespeichert, wohingegen die Exponenten $\hat{a}$, $\hat{b}$ mit vorzugsweise 8 oder sogar weniger Bit abgespeichert werden. Es sei angemerkt, dass des Weiteren die Information, welche Basis für die Exponentialdarstellung gewählt wurde, bekannt sein muss. Das bedeutet, dass eine starke Quantisierung des Exponenten gewählt werden kann, wodurch Speicherplatz eingespart wird. Des Weiteren sei angemerkt, dass die Multiplikation nach einer der oben genannten Gleichungen (1),(2) unabhängig von einem Hardwarezahlendarstellungsformat, z.B. fixed-point, ist, da die Multiplikation im Binärsystem ausgeführt wird.

Für allgemeine Basen *B* mit der Bedingung *B* ≠ 2 lässt sich eine beliebige Zahl *c* in einer Exponentialdarstellung definieren:

$$c = B^{\hat{c}} \qquad (3)$$

mit einem Exponenten $\hat{c}$, der vorzugsweise quantisiert ist.

Ferner werden im Nachfolgenden die Basen *B* folgendermaßen gewählt, sodass diese die Gleichung erfüllen:

$$ld(B) = 2^z \qquad (4)$$

wobei z aus der Menge der ganzen Zahl ( $z \in \mathbb{Z}$ ) stammt und vorzugsweise einen negativen Wert aufweist.

Für den gegebenen quantisierten Exponenten $\hat{c}$ der Basis B und gegebenen Exponenten *z* der Basis 2, wird eine Rekonstruktion des Wertes *c* bei gegeneben $\hat{c}$, *z* wie folgt berechnet:

$$c = B^{\hat{c}} = 2^{ld(B)\hat{c}} = 2^{2^z \hat{c}} = 2^{\hat{c} \ll z} = 1 \ll (\hat{c} \ll z) \qquad (5)$$

Für den Fall, dass *z* < 0 ist, erfolgt die bitweise Verschiebung nach rechts und im Exponenten entsteht eine Binärzahl, welche z Nachkommastellen aufweist.

Gleichung (5) kann des Weiteren vereinfacht werden:

$$c = 2^{\hat{c} \ll z} = 2^{Integer\{\hat{c} \ll z\} + Fractional\{\hat{c} \ll z\}} \qquad (6)$$

$$= 2^{Fractional\{\hat{c} \ll z\}} \, 2^{Integer\{\hat{c} \ll z\}}$$

$$= 2^{Fractional\{\hat{c} \ll z\}} \ll Integer\{\hat{c} \ll z\}$$

Es sei angemerkt, dass der Fractional-Anteil aus der Zahl $\hat{c}$ direkt hergeleitet werden kann, da der Fractional-Anteil wie eben erwähnt z Stellen umfasst.

Vorzugsweise wird die Gleichung (6) ausschließlich in Hardware ausgeführt. Denkbar ist dann, dass der Wert

$2^{Fractional\{\hat{c}\ll z\}}$ in einer Look-Up Table (LUT) hinterlegt ist. Die LUT enthält $2^z$ Einträge, sodass alle notwendigen Werte für den Ausdruck $2^{Fractional\{\hat{c}\ll z\}}$ hinterlegt sind.

Damit lässt sich die Zahl c durch eine bitweise Verschiebung nach links der aus der LUT ausgelesenen Zahl um den Wert des Ausdrucks $Integer\{\hat{c} \ll z\}$ Stellen effizient rekonstruieren. Es sei angemerkt, dass auch der aus der LUT gelesene Wert quantisiert ist, vorzugsweise mit einer Quantisierungsauflösung zwischen 5 bis 30 Bit.

Das Verfahren (10) nach Figur 1 beginnt mit Schritt 11. In Schritt 11 werden die Multiplikanden (c, d) in der Exponentendarstellung bereitgestellt. Das Bereitstellen umfasst dabei, dass die Exponenten ($\hat{c}$, $\hat{d}$) der Multiplikanden (c,d) und zumindest die Basen ($B_c$, $B_d$) dieser Multiplikanden (c,d) bereitgestellt werden. Bevorzugt werden die Basen ($B_c$, $B_d$) ebenfalls bereits in der Exponentialdarstellung bereitgestellt. Alternativ können die bereitgestellten Basen ($B_c$, $B_d$) in die Exponentialdarstellung abhängig von einer vorgebbaren Basis, zweckmäßig hat die vorgebbare Basis den Wert 2, umgewandelt werden, siehe Gleichung (4).

In der Exponentialdarstellung lässt sich die Multiplikation wie folgt ermitteln:

$$cd = B_c^{\hat{c}}\, B_d^{\hat{d}} = 2^{ld(B_c)\hat{c}\,+\,ld(B_d)\hat{d}} \qquad (7)$$

Sei nun $B_m$ = min($B_c$ ,$B_d$), $B_m$ = $2^{2^{z_b}}$ und $z_b$ = min($z_c$,$z_d$) d.h. dann folgt für $z_c < z_d$:

$$cd = 2^{ld(B_c)\hat{c}\,+\,ld(B_d)\hat{d}} = 2^{2^{z_b}\left(\hat{c}\,+\,2^{z_d}\,2^{-z_c}\,\hat{d}\right)} \qquad (8)$$

Da in diesem Beispiel $z_d$ - $z_c$ > 0 gilt, kann die Addtion der Exponenten in Hardware mittels eines Bit-Adjustments erfolgen, d.h. mit einem rechtsseitigen Auffüllen von binären Nullen respektive eines Bitshifts abhängig von der Differenz $z_d$ - $z_c$.

Falls $z_c < z_d$, dann entspricht die Multiplikation mit $2^{z_b}$ einem Verschieben nach rechts und das Ergebnis der Addition in der Klammer in Gleichung (8) wird nach rechts verschoben, wodurch die Anzahl der Nachkommastellen im Exponent durch $\|z_b\|$ definiert wird.

Gleichung (8) kann wie folgt vereinfacht werden:

$$cd = 2^{2^{z_b}\left(\hat{c}\,+\,2^{z_d}\,2^{-z_c}\,\hat{d}\right)}$$

$$= 2^{\left(\hat{c}\,+\,\left(\hat{d}\ll(z_d-z_c)\right)\right)\ll z_b} := 2^{\hat{p}} \qquad (9)$$

Nachdem Schritt 11 abgeschlossen wurde, folgt Schritt 12. Hierin wird wie in der zweiten Zeile der Gleichung (9) gezeigt, eine Subtraktion der Exponenten ($z_d$-$z_c$) durchgeführt.

Anschließend wird in Schritt 12 eine erste bitweise Verschiebung einer der Exponenten ($\hat{d}$) um die Anzahl der Stellen des Wertes des Ergebnisses der Subtraktion ($z_d$ - $z_c$) durchgeführt. Die erste bitweise Verschiebung lässt sich vorzugsweise als Bit Adjustment, wie zu Gleichung (8) erwähnt, in Hardware ausführen. Anschließend wird das Ergebnis der ersten bitweisen Verschiebung auf den weiteren Exponenten ($\hat{c}$) addiert.

Im nachfolgenden Schritt 13 wird das Ergebnis der Addition um die Anzahl der Stellen des Wertes von $z_b$ (insbesondere nach rechts) durch ein zweites Verschieben verschoben. Nun liegt $\hat{p}$ als Ergebnis vor. Dabei ist anzumerken, dass das zweite Verschieben für den Fall $z_b < 0$, zu $\|z_b\|$ Nachkommastellen in $\hat{p}$ führt.

Nach Schritt 13 folgt Schritt 14. Hierin wird das ermittelte Ergebnis $\hat{p}$ aus Schritt 13 wie in Gleichung (6) in einen Fractional- und einen Integer-Anteil aufgeteilt. Alternativ kann Schritt 13 übersprungen werden und in Schritt 14 wird das Ergebnis der Addition aus Schritt 12 abhängig von dem Werte $z_b$ direkt in einen Fractional- und einen Integer-Anteil aufgeteilt.

Das Endergebnis der Multiplikation für c · d = p ist dann gegeben als:

$$c \cdot d = 2^{Fractional\{\hat{p}\}} \ll Integer\{\hat{p}\} \qquad (10)$$

Das bedeutet, dass in Schritt 14 der Wert des Fractional-Anteiles um die Anzahl der Stellen des Wertes des Integer-Anteiles verschoben wird.

Vorzugsweise ist der Wert des Ausdruckes $2^{Fractional\{\hat{p}\}}$ in einer LUT hinterlegt und zum Ermitteln des Ergebnisses c · d, wird der Wert aus der LUT ausgelesen. Diese LUT umfasst $2^{\|z_b\|}$ Einträge, sodass für jeden möglichen Wert von $Fractional\{\hat{p}\}$ ein korrespondierender Wert $2^{Fractional\{\hat{p}\}}$ hinterlegt ist. Die Einträge der LUT können initial zu Beginn des Verfahrens (10) ermittelt und hinterlegt werden.

Es sei angemerkt, dass das Verfahren auch mit mehr als zwei Multiplikanden ($a,b,c,...$) ausführbar ist. Hierfür enthält die LUT $2^{\|min(z_a,z_b,z_c\cdots)\|}$ Einträge. Bei Verwenden des Verfahrens mit mehr als zwei Multiplikanden, müssen die obigen Gleichungen entsprechend durch Hinzufügen der Exponenten der weiteren Multiplikanden erweitert werden. Denkbar ist auch, dass die Multiplikanden mit mehr als einem Exponenten beschrieben werden, dies kann ebenfalls in den obigen Gleichungen berücksichtigt werden.

Es sei angemerkt, dass das Verfahren (10) auch mit zumindest einem negativen Multiplikanden ausgeführt werden kann. Weißt einer der oder beide Multiplikanden ein negatives Vorzeichen auf, kann das Verfahren (10) in einer weiteren Ausführungsform bis einschließlich Schritt 14 unter Vernachlässigen der Vorzeichen der Multiplikanden ausgeführt werden. Nach dem Schritt 14 beendet wurde, wird daraufhin in dieser Ausführungsform Schritt 15 ausgeführt. In Schritt 15 wird das Vorzeichen des Ergebnisses der Multiplikation von $p = c \cdot d$ das entsprechend der Vorzeichen der jeweiligen Multiplikanden ($c, d$) angepasst. Ist beispielsweise ein Multiplikand negativ, wird das Ergebnis der Multiplikation ebenfalls negativ. Sind beide Multiplikanden negativ, ist das Ergebnis der Multiplikation positiv.

Damit endet das Verfahren (10). Denkbar ist, dass das Verfahren in Hardware oder Software oder in einer Mischform aus Software und Hardware implementiert ist.

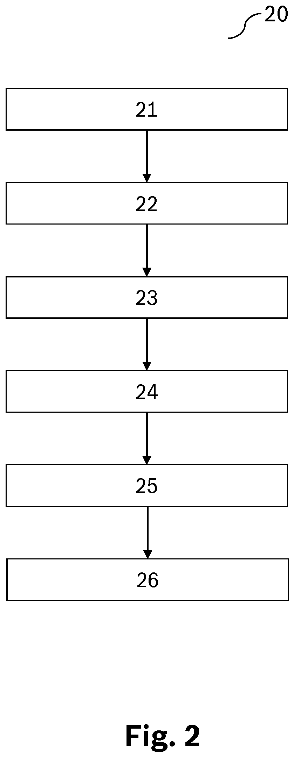

Figur 2 zeigt eine schematische Darstellung eines Verfahren (20) zur Ermittlung der Basen ($B_c$, $B_d$) der Exponentialdarstellung der Multiplikanden für ein maschinelles Lernsystem. In dieser Ausführungsform umfasst das maschinelle Lernsystem ein tiefes neuronales Netz.

Das Verfahren (20) beginnt mit Schritt 21. Hierin wird ein angelerntes maschinelles Lernsystem bereitgestellt. D.h. eine Parametrisierung des maschinellen Lernsystems wurde bereits beim Anlernen ermittelt. Das maschinelle Lernsystem kann anhand von bereitgestellten Trainingsdaten mittels eines Optimierungsverfahrens, insbesondere eines Gradientenabstiegsverfahrens, angelernt worden sein. Alternativ kann in Schritt 21 das maschinelle Lernsystem angelernt werden.

Im nachfolgenden Schritt 22 werden die Parameter und zusätzlich oder alternativ Zwischenergebnisse des maschinellen Lernsystem ausgewählt, die in die Exponentialdarstellung umgewandelt werden. Für diese Parameter und/oder Zwischenergebnisse werden dann Gleichungen (vgl. nachfolgende Gleichungen (13) und (14)) aufgestellt, die optimiert werden. Das Ergebnis der Optimierung ergibt dann diejenigen Basen, die für eine geeignete Darstellung der Parameter und/oder Zwischenergebnisse in der Exponentialdarstellung geeignet sind.

Wenn das maschinelle Lernsystem beispielhaft ein neuronales Netz umfasst, können die Parameter, insbesondere Zwischenergebnisse, schichtweise in die Exponentialdarstellung umgewandelt werden. Vorzugsweise werden die Parameter und/oder Zwischenergebnisse der jeweiligen Schichten jeweils mittels derselben Basis dargestellt. Vorzugsweise wird beim Ermitteln der Basen die Nebenbedingung berücksichtigt, dass die Basen einen Wert kleiner 2 aufweisen.

Zusätzlich können die Exponenten der Parameter und der Zwischenergebnisse des maschinellen Lernsystems in der Exponentendarstellung quantisiert sein.

Für die Zwischenergebnisse $y^{(l)}$ der Schicht ($l$) in der quantisierten Exponentendarstellung $\hat{y}^{(l)}$ gilt:

$$y^{(l)} \cong B_y{}^{\hat{y}^{(l)}} =: \tilde{y}^{(l)} \tag{11}$$

Der in Gleichung (11) dargestellte Zusammenhang gilt auch für die Darstellung der Parameter des maschinellen Lernsystems, insbesondere für diejenigen Parameter die mit anderen Werten, wie den Zwischenergebnissen, multipliziert werden.

Das Ermitteln der Basis ($B_y$, $B_w$) wird abhängig von dem Quantisierungsfehler $q = y^{(l)} - \tilde{y}^{(l)}$ durchgeführt.

Alternativ kann ein propagierter Quantisierungsfehler verwendet werden, um die Basis ($B_y$, $B_w$) zu ermitteln. Der propagierte Quantisierungsfehler charakterisiert einen Unterschied zwischen dem Ergebnis der Multiplikation mit und ohne Quantisierung, oder einen Unterschied zwischen einer weiteren Multiplikation, bei der dieses Ergebnis als Multiplikand für die weitere Multiplikation wiederverwendet wird.

Der propagierte Quantisierungsfehler $q_p$ ist gegeben durch die folgende Gleichung:

$$q_p = \sum w^{(l+1)} x^{(l+1)} - \sum w^{(l+1)} \tilde{x}^{(l+1)} \tag{12}$$

Hierbei wurden die Ausgangsgrößen $y^{(l)}$ der Schicht ($l$) des maschinellen Lernsystems, insbesondere neuronalen Netzes, als Eingangsgrößen $x$ der Schicht ($l + 1$) geschrieben. Zusätzlich oder alternativ kann auch die ($l + n$)-te Schicht zur Ermittlung des Quantisierungsfehlers verwendet werden. Als Eingangsgröße des maschinellen Lernsystems können die verwendeten Trainingsdaten zum Anlernen des maschinellen Lernsystems verwendet werden.

Die optimale Wahl für $B_y$, $B_w$ für den propagierten Quantisierungsfehler ist gegeben durch:

$$B_y^{(l)} = \underset{B_y^{(l)}}{arg\,min}\left(\left\|\sum w^{(l+1)}x^{(l+1)} - \sum w^{(l+1)}\tilde{x}^{(l+1)}\right\|_2\right) \qquad (13)$$

$$B_w^{(l)} = \underset{B_w^{(l)}}{arg\,min}\left(\left\|\sum w^{(l)}x^{(l)} - \sum \tilde{w}^{(l)}x^{(l)}\right\|_2\right) \qquad (14)$$

Nachdem die Gleichungen (13),(14) aufgestellt wurden, werden diese daraufhin in Schritt 22 gelöst, um die jeweiligen Basen zu ermitteln.

Die Gleichungen (13) und (14) können mittels eines kombinatorischen Testens unterschiedlicher Werte der Basen minimiert werden, alternativ mittels eines Gradientenabstiegsverfahren.

Nach Beendigung Schrittes 22, kann Schritt 23 ausgeführt werden. In Schritt 23 werden die ermittelten Basen den jeweiligen Parametern und/oder Zwischenergebnissen zugeordnet.

Im nachfolgenden Schritt 24 können die Parameter und/oder Zwischenergebnisse abhängig von den zugeordneten Basen in die Exponentialdarstellung umgewandelt werden.

Vorzugsweise wird anschließend Schritt 25 ausgeführt. Hierin wird die Quantisierung der Exponenten ($\hat{c}$, $\hat{d}$, $z_c$, $z_d$) optimiert. Die Wahl der Bitbreite der Quantisierung der Exponenten kann iterativ durchgeführt werden. Vorzugsweise wird der Exponent initial mit 8 Bit, maximal mit 10 Bit, wahlweise auch mit mehr als 10 Bit, quantisiert. Daraufhin wird schrittweise jeweils ein Bit weniger verwendet, solange wie das maschinelle Lernsystem ausreichend gute Ergebnisse liefert, verglichen zum Beispiel mit der Vorhersagequalität des maschinellen Lernsystems mit der initialen Quantisierung.

Optional werden in Schritt 26 die Parameter und/oder Zwischenergebnisse in der Exponentialdarstellung in einem Speicher hinterlegt. Hierfür werden die Basen und die Exponenten abgespeichert. Alternativ können die Basen ebenfalls in der Exponentialdarstellung hinterlegt werden. Vorzugsweise werden in der Exponentialdarstellung dieser Basen, die Basis zwei verwendet.

Es sei angemerkt, dass die Schritte des Ermittelns der Basen für die Zwischenergebnisse und Parameter auch während des Anlernens des maschinellen Lernsystems durchgeführt werden können. Dies kann mittels sog. Shadow-weights durchgeführt werden. Siehe hierzu Absatz "fine-tuning" auf Seite 3 in P. Gysel et al., "Hardware-oriented Approximation of Convolutional Neural Networks", 2016, arxiv.org, [Online] https://arxiv.org/pdf/1604.03168.pdf.

Das Verfahren (20) ist mit Schritt 26 abgeschlossen.

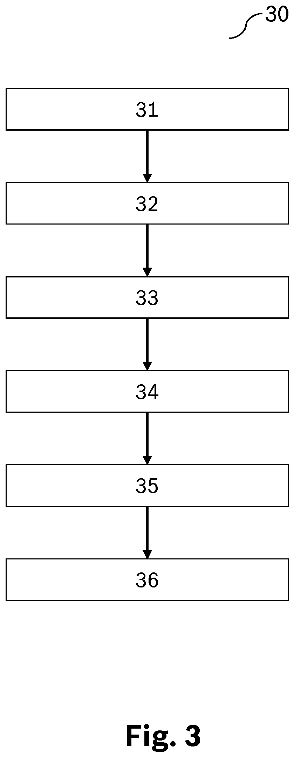

Figur 3 zeigt eine schematische Darstellung eines Verfahrens (30) zum Betreiben eines maschinellen Lernsystems, zweckgemäß auf einer Rechenmaschine, wie beispielsweise einem Computer.

Das Verfahren (30) beginnt mit Schritt 31. In diesem Schritt wird das maschinelle Lernsystem angelernt. Der Schritt 31 kann optional mehrmals hintereinander ausgeführt werden.

Nachdem das maschinelle Lernsystem angelernt ist, wird Schritt 32 ausgeführt. Hierin wird eine Mehrzahl der Parameter und/oder der Zwischenergebnisse des maschinellen Lernsystems in die Exponentialdarstellung umgewandelt. Dafür können zuerst die Basen z.B. nach dem Verfahren (20) in Figur 2 ermittelt werden. Abhängig von den ermittelten Basen werden dann die Exponenten bestimmt.

Nachdem Schritt 32 abgeschlossen wurde, folgt Schritt 33. In Schritt 33 ermittelt das maschinelle Lernsystem abhängig von seinen Parametern und einer bereitgestellten Eingangsgröße Zwischenergebnisse. Diejenigen Zwischenergebnisse, die mittels einer Multiplikation zumindest zweier Multiplikanden ermittelt werden, werden nach dem Verfahren (10) aus Figur 1 ermittelt. Die Multiplikationen können beispielsweise durch Matrixmultiplikationen oder Faltungsoperationen auftreten. Zusätzlich können die Ergebnisse der einzelnen Multiplikationen, die mittels der Verfahrens (10) durchgeführt wurden, insbesondere der Matrixmultiplikation oder der Faltungsoperation, akkumuliert werden.

Optional kann ein Ergebnis der Subtraktion der Exponenten ($z_d - z_c$) pro Schicht des maschinellen Lernsystems hinterlegt sein. Dies hat den vorteilhaften Effekt, dass das Ermitteln der Subtraktion durch ein schnelles Bereitstellen des jeweiligen Ergebnisses ausgeführt werden kann.

In dem nachfolgenden Schritt 34 kann abhängig von einer Ausgangsgröße des maschinellen Lernsystems eine Steuergröße für einen Aktor eines technischen Systems ermittelt werden.

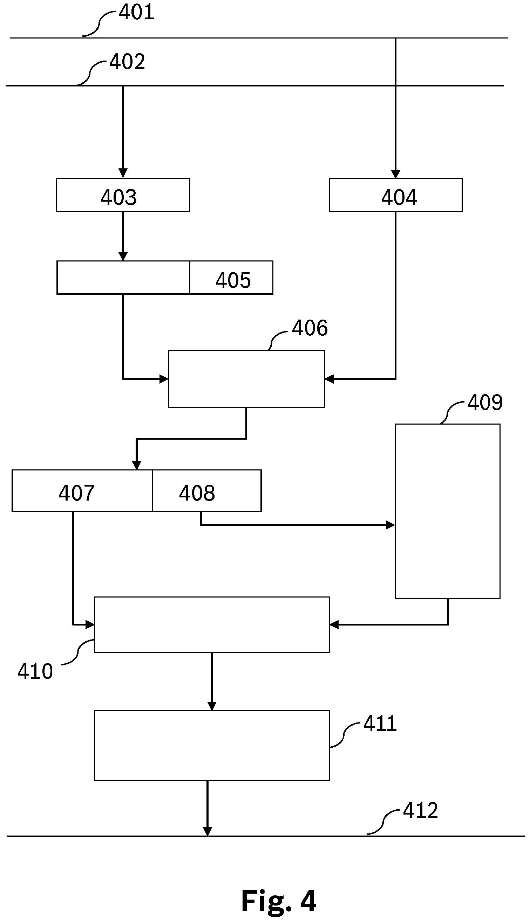

Figur 4 zeigt eine schematische Darstellung einer Recheneinheit, die eingerichtet ist, eine Multiplikation mittels bitweisen Verschiebens auszuführen.

Eine erste und eine zweite Datenleitung (401,402) können jeweils mit einem Register (403,404) der Recheneinheit verbunden sein. In diese Register (403,404) werden die Multiplikanden (c,d) geladen. Die Multiplikanden dieser Ausführungsform sind die quantisierten Exponenten, vorzugsweise binären Exponenten.

Der erste Multiplikand erfährt eine bitweise Verschiebung nach links, hiermit wird das Bit-Adjustment abhängig von der Subtraktion ($z_d - z_c$) (siehe Gleichungen (8) und (9)) hardwareressourcen-effizient durchgeführt. Optional ist die Breite des Bitshifts respektive des Registers einstellbar, vorzugsweise jeweils für die Schichten des maschinellen Lernsystems. Diese bitweise Verschiebung kann gemäß Figur 4 durch ein rechtsseitiges Auffüllen (405) eines Registers mit Nullen durchgeführt werden. Zweckgemäß stellt jede der Nullen jeweils den binären Wert "0" dar.

Anschließend wird in einer ersten Logikeinheit (406) die Berechnung des Exponenten ($\hat{p}$) aus Gleichung (9) durchgeführt. Die erste Logikeinheit (406) umfasst hierfür zumindest ein Additionswerk (zweckgemäß eine ALU), welche die Addition der jeweiligen Exponenten nach Gleichung (9) durchführt und wenigstens eine Bitshift Einheit, die das Ergebnis der Addition abhängig von dem kleinsten Exponenten ($z_b$) verschiebt. Es sei angemerkt, dass die Exponenten ($z_c$, $z_d$) mittels z.B. weiterer Datenleitungen der Logikeinheit (406) bereitgestellt werden können. Das Ergebnis der ersten Logikeinheit (406) entspricht hierbei ($\hat{p}$) nach Gleichung (9).

Das Ergebnis der Logikeinheit (406) wird anschließend in einen ganzzahligen Anteil (407) und in einen Nachkommastellen-Anteil (408) zerlegt. Der Nachkommastellen-Anteil (408) wird vorzugsweise abhängig von dem kleinsten Exponenten ($z_b$) ermittelt, der die Anzahl der Nachkommastellen angibt.

In einem weiteren Ausführungsbeispiel, insbesondere wenn der kleinste Exponent ($z_b$) einen negativen Wert aufweist, weist die erste Logikeinheit (406) nur das Additionswerk auf. Das Ergebnis der Addition wird daraufhin durch ein fiktives Verschieben des Kommas abhängig von dem kleinsten Exponenten ($z_b$) in einen ganzzahligen Anteil (407) und in einen Nachkommastellen-Anteil (408) zerlegt. Durch das fiktive Verschieben des Kommas kann auf das Verschieben des Ergebnisses der Addition durch die Bitshift Einheit verzichtet werden.

Der Nachkommastellen Anteil (408) wird anschließend als Adresse der LUT (409) verwendet. Ein hinterlegter Wert der LUT für die gegebene Adresse wird anschließend an eine zweite Logikeinheit (410) weitergeleitet.

Die zweite Logikeinheit (410) erhält neben dem Wert der LUT zusätzlich den ganzzahligen Anteil (407) des Ergebnisses der ersten Logikeinheit (406). Die zweite Logikeinheit (410) führt eine bitweise Verschiebung des Wertes der LUT um die Anzahl der Stellen des Wertes des ganzzahligen Anteils (407) durch. Vorteilhafterweise umfasst hierfür die Logikeinheit (410) eine weitere Bitshift Einheit oder verwendet alternativ die Bitshift Einheit der Logikeinheit (406).

Da das Ergebnis aus der zweiten Logikeinheit (410) nicht in der Exponentialdarstellung ausgegeben wird, kann eine Umwandlungseinheit (411) dafür eingerichtet sein, seine Eingangsgröße in die quantisierte Exponentialdarstellung umzuwandeln. Der Ausgang der Umwandlungseinheit (411) kann mit einer dritten Datenleitung (412) verbunden sein. Die Bitbreite der dritten Datenleitung (412) kann an die Bitbreite des quantisierten Exponenten angepasst werden, wodurch die effektive Bandbreite erhöht wird. Die Umwandlungseinheit (411) ist vorzugsweise ein Prioritätsencoder (engl. Priority Encoder).

Optional kann zwischen der zweiten Logikeinheit (410) und der Umwandlungseinheit (411) der Recheneinheit eine Akkumulationseinheit zwischengeschaltet sein. Die Akkumulationseinheit ist eingerichtet, bei mehrfachem hintereinander Ausführen von Multiplikationen, die Ergebnisse der Multiplikation in der Akkumulationseinheit zu akkumulieren. Dieses Ergebnis der Akkumulationseinheit kann dann verwendet werden um eine Aktivierung, insbesondere die Aktivierung eines Neurons, zu ermitteln. Es sei angemerkt, dass die ermittelten Aktivierungen auch Ergebnisse von Faltungsoperationen sein können. D.h. die Recheneinheit kann mittels der Akkumulationseinheit neben Matrixmultiplikationen auch Faltungen, wie sie bspw. bei faltenden neuronalen Netzen (engl. Convolutional Neural Networks) auftreten, ermitteln.

In einem weiteren Ausführungsbeispiel, kann die Recheneinheit zum Unterstützen des Betreibens eines maschinellen Lernsystems verwendet werden. Diese Recheneinheit kann hier mit einer Rechenmaschine verbunden sein, auf der beispielsweise das maschinelle Lernsystem betrieben wird. Multiplikationen, die beim Betreiben des maschinellen Lernsystems auf der Rechenmaschine durchgeführt werden müssen, können dann auf die Recheneinheit ausgelagert werden.

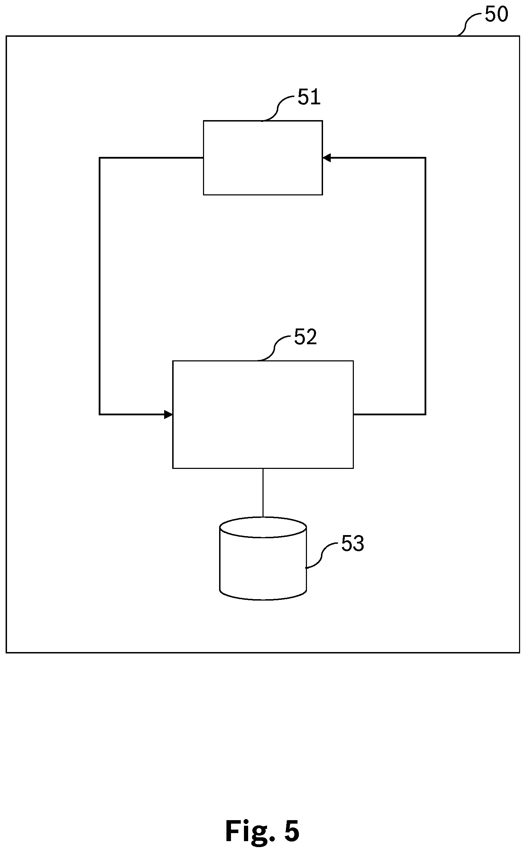

Figur 5 zeigt eine schematische Darstellung einer Vorrichtung (50) zum Anlernen des maschinellen Lernsystems, insbesondere zum Ausführen der Schritte zum Anlernen des maschinellen Lernsystems, z.B. Schritt 31 des Verfahrens (30). Die Vorrichtung (50) umfasst ein Trainingsmodul (51) und ein zu trainierendes Modul (52). Dieses zu trainierende Modul (52) beinhaltet das maschinelle Lernsystem. Die Vorrichtung (50) zum Anlernen des maschinellen Lernsystem lernt abhängig von Ausgangsgrößen des maschinellen Lernsystem und bevorzugt mit vorgebbaren Trainingsdaten das maschinelle Lernsystem an. Zweckgemäß umfassen die Trainingsdaten eine Mehrzahl von erfassten Bildern, die jeweils gelabelt sind. Während des Anlernens werden Parameter des maschinellen Lernsystems, die in einem Speicher (53) hinterlegt sind, angepasst.

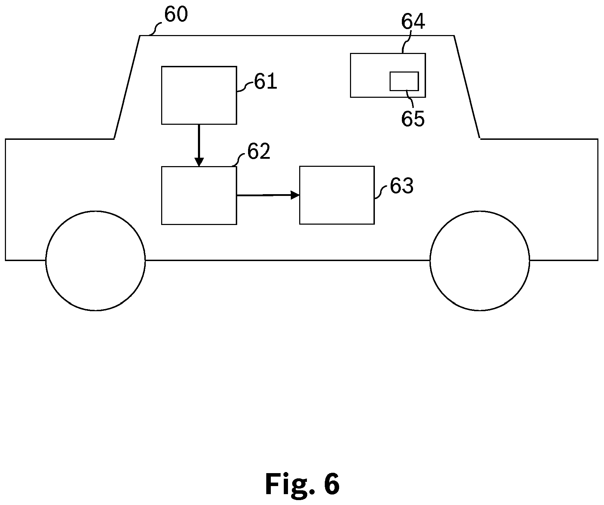

Figur 6 zeigt eine schematische Darstellung eines zumindest teilautonomen Fahrzeuges (60). In einem weiteren Ausführungsbeispiel kann das zumindest teilautonome Fahrzeug (60) ein Service-, Montage- oder stationärer Produktionsroboter, alternativ ein autonomes Flugobjekt, wie eine Drohne, sein. Das zumindest teilautonome Fahrzeug (60) kann eine Erfassungseinheit (61) umfassen. Die Erfassungseinheit (61) kann zum Beispiel eine Kamera sein, welche eine Umgebung des Fahrzeugs (60) erfasst. Die Erfassungseinheit (61) kann mit einem maschinellen Lernsystem (62) verbunden sein. Das maschinelle Lernsystem (62) ermittelt abhängig von einer bereitgestellten Eingangsgröße, z.B. bereitgestellt von der Erfassungseinheit (61), und in Abhängigkeit einer Mehrzahl von Parametern des maschinellen Lernsystem (62) eine Ausgangsgröße. Die Ausgangsgröße kann an eine Aktorsteuerungseinheit (63) weitergeleitet werden. Die Aktorsteuerungseinheit (63) steuert in Abhängigkeit der Ausgangsgröße des maschinellen Lernsystem (62) einen Aktor, vorzugsweise steuert diesen den Aktor derart, dass das Fahrzeug (60) ein kollisionsfreies Manöver ausführt.

Der Aktor kann in diesem Ausführungsbeispiel ein Motor oder ein Bremssystem des Fahrzeugs (60) sein.

Ferner umfasst das Fahrzeug (60) die Rechenmaschine (64) und ein maschinenlesbares Speicherelement (65). Auf dem Speicherelement (65) kann ein Computerprogramm gespeichert sein, welches Befehle umfasst, die beim Ausführen der Befehle auf der Rechenmaschine (64) dazu führen, dass die Rechenmaschine (64) eines der oben genannten Verfahren (10,20,30) ausführt. Denkbar ist auch, dass ein Downloadprodukt oder ein künstlich generiertes Signal, die jeweils das Computerprogramm umfassen können, nach Empfangen an einem Empfänger des Fahrzeugs (60) die Rechenmaschine (64) veranlassen, eines dieser Verfahren auszuführen.

In einem alternativen Ausführungsbeispiel kann das maschinelle Lernsystem (62) für eine Gebäudesteuerung eingesetzt werden. Ein Nutzerverhalten wird mittels eines Sensors erfasst, beispielsweise einer Kamera oder eines Bewegungsmelders, und die Aktorsteuerungseinheit steuert beispielsweise eine Wärmepumpe einer Heizung abhängig von der Ausgangsgröße des maschinellen Lernsystems (62) an. Das maschinelle Lernsystem (62) kann dann eingerichtet sein, abhängig von einer erfassten Sensorgröße zu ermitteln, welcher Betriebsmodus der Gebäudesteuerung auf Basis dieses Nutzerverhaltens gewünscht ist.

In einem weiteren Ausführungsbeispiel umfasst die Aktorsteuerungseinheit (63) ein Freigabesystem. Das Freigabesystem entscheidet, ob ein Objekt, z.B. ein erfasster Roboter oder eine erfasste Person, Zugang zu einem Bereich hat, abhängig von der Ausgangsgröße des maschinellen Lernsystems (62). Vorzugsweise wird der Aktor, beispielhaft ein Türöffnungsmechanismus, mittels der Aktorsteuerungseinheit (63) angesteuert wird. Die Aktorsteuerungseinheit (63) des vorherigen Ausführungsbeispiels der Gebäudesteuerung kann zusätzlich dieses Freigabesystem umfassen.

In einem alternativen Ausführungsbeispiel kann das Fahrzeug (60) ein Werkzeug oder eine Werkmaschine oder ein Fertigungsroboter sein. Ein Material eines Werkstückes kann mittels des maschinellen Lernsystems (62) klassifiziert werden. Der Aktor kann hierbei z.B. ein Motor, der einen Schleifkopf betreibt, sein.

In einer weiteren Ausführungsform wird das maschinelle Lernsystem (62) in einem Messsystem verwendet, welches nicht in den Figuren dargestellt ist. Das Messsystem unterscheidet sich zu dem Fahrzeug (60) nach Figur 1 dahingehend, dass das Messsystem keine Aktorsteuerungseinheit (63) umfasst. Das Messsystem kann die Ausgangsgröße des maschinellen Lernsystems (62), statt sie an die Aktorsteuerungseinheit (63) weiterzuleiten, beispielsweise für eine spätere Wiederverwendung abspeichern oder zusätzlich oder alternativ darstellen, beispielsweise mittels visueller oder auditiver Darstellungen.

Es ist auch denkbar, dass in einer Weiterentwicklung des Messsystems die Erfassungseinheit (61) ein Bild eines menschlichen oder tierischen Körpers oder eines Teils davon erfasst. Beispielsweise kann dies mittels eines optischen Signals, mittels eines Ultraschallsignals, oder mittels eines MRT/CT-Verfahrens erfolgen. Das Messsystem kann in dieser Weiterentwicklung das maschinelle Lernsystem (62) umfassen, das derart angelernt ist, abhängig von der Eingangsgröße eine Klassifikation auszugeben, z.B. welches Krankheitsbild auf Basis diese Eingangsgröße möglicherweise vorliegt.

**Patentansprüche**

1. Recheneinheit, die eingerichtet ist, eine Multiplikation zumindest zweier Multiplikanden (*c,d*) auszuführen,

wobei die Multiplikanden *(c,d)* jeweils einen ersten Exponenten ($\hat{c}$, $\hat{d}$) und eine erste Basis ($B_c$, $B_d$) aufweisen, wobei die ersten Basen ($B_c$, $B_d$), jeweils eine zweite Basis, einen zweiten und einen dritten Exponenten ($z_c$, $z_d$) aufweisen, umfassend:

zumindest eine Bitshift Einheit, wobei die Bitshift Einheit eine binäre Zahl um eine vorgebbare Anzahl an Stellen, insbesondere nach links, verschiebt;
eine Arithmetische Einheit und einen Speicher;
wobei die Arithmetische Einheit eine Subtraktion der dritten Exponenten ($z_c$, $z_d$) ausführt,
wobei die Bitshift Einheit ein erstes Verschieben einer binären Zahl einer der ersten Exponenten ($\hat{d}$) der Multiplikanden *(c,d)* um eine Anzahl der Stellen eines Wertes der subtrahierten Exponenten ($z_d - z_c$) ausführt und,
wobei die Arithmetische Einheit eine Addition des Ergebnisses des ersten Verschiebens mit dem weiteren ersten Exponenten ($\hat{c}$) der Multiplikanden (c,d) ausführt,
wobei das Ergebnis der Addition in einen ganzzahligen Anteil (engl. integer part) und einen Nachkommastellen-Anteil (engl. fractional part) abhängig von einem kleineren Exponenten ($z_b$) der dritten Exponenten ($z_c$, $z_d$) aufgeteilt wird,
wobei eine binäre Zahl des Nachkommastellen-Anteils aus dem Speicher ausgelesen wird, und
wobei die Bitshift Einheit ein zweites Verschieben der binären Zahl des Nachkommastellen-Anteils um die Anzahl der Stellen des Wertes des ganzzahligen Anteils ausführt.

2. Recheneinheit nach Anspruch 1, wobei die Bitshift Einheit das erste Verschieben mittels eines rechtsseitigen Auffüllens mit einer Mehrzahl von "0" abhängig von einem Wert der Subtraktion der dritten Exponenten ($z_c$, $z_d$) ausführt.

3. Recheneinheit nach einem der vorherigen Ansprüche, wobei der Speicher zumindest $2^n$ Einträge aufweist, wobei $n$ gleich des Betrags des kleineren Exponenten der dritten Exponenten ($z_c$, $z_d$) ist, wobei der Nachkommastellen-Anteil als Adresse zum Auslesen des binären Wertes des Nachkommastellen-Anteil aus dem Speicher verwendet wird.

4. Recheneinheit nach einem der vorherigen Ansprüche, wobei die Recheneinheit des Weiteren eine Akkumulationseinheit umfasst, welche Ergebnisse einer Mehrzahl der Multiplikationen zumindest jeweils zweier Multiplikanden akkumuliert.

5. Recheneinheit nach Anspruch 4, wobei die Akkumulationseinheit durch einen Adder-Tree realisiert ist.

6. Recheneinheit nach einem der vorherigen Ansprüche, wobei eine Umrecheneinheit (411), insbesondere ein Prioritätsencoder, das Ergebnis des zweiten Verschiebens in eine Exponentialdarstellung umwandelt.

7. Verfahren (10) zum Multiplizieren zumindest zweier Multiplikanden ($c,d$) auf einer Recheneinheit, wobei die Multiplikanden ($c,d$) jeweils einen ersten Exponenten ($\hat{c}$, $\hat{d}$) und eine erste Basis ($B_c$, $B_d$) aufweisen,

wobei ersten Basen ($B_c$, $B_d$), jeweils eine zweite Basis, einen zweiten und einen dritten Exponenten ($z_c$, $z_d$) aufweisen, umfassend folgende Schritte:

- Bereitstellen der ersten Exponenten ($\hat{c}$, $\hat{d}$) der Multiplikanden ($c,d$) und der dritten Exponenten ($z_c$, $z_d$),

wobei jeder der bereitgestellten Exponenten ($\hat{c}$, $\hat{d}$, $z_c$, $z_d$) quantisiert ist;

- Subtrahieren der dritten Exponenten ($z_c$, $z_d$);
- Erstes Verschieben einer binären Zahl einer der ersten Exponenten ($\hat{d}$) der Multiplikanden ($c,d$) um eine Anzahl der Stellen eines Wertes der subtrahierten Exponenten ($z_d - z_c$);
- Addieren des Ergebnisses des ersten Verschiebens mit dem weiteren ersten Exponenten ($\hat{c}$) der Multiplikanden ($c,d$);
- Aufteilen des Ergebnisses der Addition in einen ganzzahligen Anteil (engl. integer part) und einen Nachkommastellen-Anteil (engl. fractional part) abhängig von einem kleineren Exponenten ($z_b$) der dritten Exponenten ($z_c$, $z_d$); und
- Zweites Verschieben einer binären Zahl des Nachkommastellen-Anteils um die Anzahl der Stellen des Wertes des ganzzahligen Anteils.

8. Verfahren nach Anspruch 7, wobei die binäre Zahl des Nachkommastellen-Anteils aus einem Speicher, insbesondere einer Look-Up-Tabel, ausgelesen wird, wobei der Nachkommastellen-Anteil als Adresse des Speichers zum Auslesen der binären Zahl des Nachkommastellen-Anteils verwendet wird.

9. Verfahren nach einem der Ansprüche 7 oder 8, wobei das Ergebnis des zweiten Verschiebens in einen Exponenten und eine vorgebbare Basis zerlegt wird.

10. Verfahren nach einem der Ansprüche 7 bis 9, wobei jede der zweiten Basen den Wert zwei und jeder der zweiten Exponenten den Wert zwei aufweist.

11. Verfahren nach einem der Ansprüche 7 bis 10, wobei die bereitgestellten Exponenten mittels maximal 10 Bit dargestellt werden.

12. Verfahren zum Betreiben eines maschinellen Lernsystems, wobei jeweils eine Mehrzahl von Parametern und Zwischengrößen des maschinellen Lernsystems als Multiplikanden mittels der Exponentialdarstellung in einem Speicher hinterlegt sind, wobei Multiplikationen der hinterlegten Multiplikanden nach einem der Verfahren der Ansprüche 7 bis 11 ausgeführt werden.

**13.** Verfahren nach Anspruch 12, wobei beim Anlernen des maschinellen Lernsystems zumindest die Basen der Exponentialdarstellung der Zwischengrößen und der Parameter ermittelt werden.

**14.** Verfahren nach Anspruch 12, wobei nach dem Anlernen des maschinellen Lernsystems zumindest die Basen für die Exponentialdarstellung der Zwischengrößen und der Parameter des maschinellen Lernsystems ermittelt werden.

**15.** Verfahren nach Anspruch 13 oder 14, wobei die Basen abhängig von einem propagierten Quantisierungsfehler ermittelt werden,
wobei der propagierte Quantisierungsfehler eine Differenz des Ergebnisses der Multiplikation zweier Multiplikanden mit quantisierten Exponenten und eines Ergebnisses der Multiplikation dieser zwei Multiplikanden, insbesondere mit reellen Exponenten, charakterisiert.

**16.** Verfahren nach einem der Ansprüche 13 bis 15, wobei die Exponenten abhängig von der ermittelten Basis der Exponentialdarstellung ermittelt werden und die ermittelten Exponenten quantisiert werden,
wobei beim Quantisieren der Exponenten, beginnend bei einer Auflösung einer Quantisierung der Exponenten mittels 10 Bit, schrittweise die Auflösung um jeweils ein Bit reduziert wird, dann wenn eine einen Quantisierungsfehler charakterisierende Größe kleiner als eine vorgebbare Größe ist.

**17.** Verfahren nach einem der Ansprüche 12 bis 16, wobei die Eingangsgröße des maschinellen Lernsystems eine Größe ist, welche mittels eines Sensors erfasst wurde,
wobei abhängig von einer Ausgangsgröße des maschinellen Lernsystems eine Steuergröße ermittelt wird.

**18.** Computerprogramm, welches Befehle umfasst, welche beim Ausführen auf einem Computer, diesen veranlassen, das Verfahren nach einem der Ansprüche 7 bis 17 auszuführen.

**19.** Maschinenlesbares Speicherelement, auf welchem das Computerprogramm nach Anspruch 18 hinterlegt ist.

**20.** Maschinelles Lernsystem, erhältlich durch eines der Verfahren nach einem der Ansprüche 13 bis 16.

**Claims**

**1.** Computing unit designed for carrying out the multiplication of at least two multiplicands *(c,d)*,

wherein the multiplicands *(c,d)* have in each case a first exponent $(\hat{c}, \hat{d})$ and a first base *($B_c$, $B_d$)*,
wherein the first bases *($B_c$, $B_d$)* have in each case a second base, a second and a third exponent *($z_c$, $z_d$)*, comprising:
at least one bitshift unit, wherein the bitshift unit shifts a binary number by a predeterminable number of places, in particular to the left;
an arithmetic logic unit and a memory;
wherein the arithmetic logic unit performs a subtraction of the third exponents *($z_c$, $z_d$)*,
wherein the bitshift unit performs a first shift of a binary number of one of the first exponents $(\hat{d})$ of the multiplicands *(c,d)* by a number of places of a value of the subtracted exponents *($z_d$ - $z_c$)* and,
wherein the arithmetic logic unit performs an addition of the result of the first shift with the further first exponent $(\hat{c})$ of the multiplicands (c,d),
wherein the result of the addition is divided into an integer part and a fractional part, depending on a smaller exponent *($z_b$)* of the third exponents *($z_c$, $z_d$)*,
wherein a binary number of the fractional part is read out from the memory, and
wherein the bitshift unit performs a second shift of the binary number of the fractional part by the number of places of the value of the integer part.

**2.** Computing unit according to Claim 1, wherein the bitshift unit performs the first shift by means of filling up the right side with a plurality of "0s", depending on a value of the subtraction of the third exponents *($z_c$, $z_d$)*.

**3.** Computing unit according to one of the preceding claims, wherein the memory has at least $2^n$ entries, where *n* is equal to the absolute value of the smaller exponent of the third exponents *($z_c$, $z_d$)*,
wherein the fractional part is used as an address for reading out the binary value of the fractional part from the memory.

4. Computing unit according to one of the preceding claims, wherein the computing unit also comprises an accumulation unit, which accumulates results of a plurality of the multiplications of in each case at least two multiplicands.

5. Computing unit according to Claim 4, wherein the accumulation unit is realized by an adder tree.

6. Computing unit according to one of the preceding claims, wherein a converting unit (411), in particular a priority encoder, converts the result of the second shift into an exponential representation.

7. Method (10) for multiplying at least two multiplicands $(c,d)$ on a computing unit, wherein the multiplicands $(c,d)$ have in each case a first exponent $(\hat{c}, \hat{d})$ and a first base $(B_c, B_d)$,

   wherein first bases $(B_c, B_d)$ have in each case a second base, a second and a third exponent $(z_c, z_d)$, comprising the following steps:

   - providing the first exponents $(\hat{c}, \hat{d})$ of the multiplicands $(c,d)$ and of the third exponents $(z_c, z_d)$,

   wherein each of the exponents $(\hat{c}, \hat{d}, z_c, z_d)$ provided has been quantized;

   - subtracting the third exponents $(z_c, z_d)$;
   - first shifting of a binary number of one of the first exponents $(\hat{d})$ of the multiplicands $(c,d)$ by a number of places of a value of the subtracted exponents $(z_d - z_c)$;
   - adding the result of the first shift with the further first exponents $(\hat{c})$ of the multiplicands $(c,d)$;
   - dividing the result of the addition into an integer part and a fractional part, depending on a smaller exponent $(z_b)$ of the third exponents $(z_c, z_d)$; and
   - second shifting of a binary number of the fractional part by the number of places of the value of the integer part.

8. Method according to Claim 7, wherein the binary number of the fractional part is read out from a memory, in particular a look-up table,
   wherein the fractional part is used as an address of the memory for reading out the binary number of the fractional part.

9. Method according to either of Claims 7 and 8, wherein the result of the second shift is broken down into an exponent and a predeterminable base.

10. Method according to one of Claims 7 to 9, wherein each of the second bases has the value two and each of the second exponents has the value two.

11. Method according to one of Claims 7 to 10, wherein the exponents provided are represented by means of a maximum of 10 bits.

12. Method for operating a machine learning system, wherein a plurality of parameters and intermediate variables of the machine learning system are respectively stored as multiplicands by means of the exponential representation in a memory,
    wherein multiplications of the stored multiplicands are performed by one of the methods of Claims 7 to 11.

13. Method according to Claim 12, wherein, during the training process of the machine learning system, at least the bases of the exponential representation of the intermediate variables and the parameters are determined.

14. Method according to Claim 12, wherein, after the training process of the machine learning system, at least the bases for the exponential representation of the intermediate variables and the parameters of the machine learning system are determined.

15. Method according to Claim 13 or 14, wherein the bases are determined depending on a propagated quantization error, wherein the propagated quantization error characterizes a difference in the result of the multiplication of two multiplicands with quantized exponents and a result of the multiplication of these two multiplicands, in particular with real exponents.

16. Method according to one of Claims 13 to 15, wherein the exponents are determined depending on the determined base of the exponential representation and the determined exponents are quantized,
wherein during the quantizing of the exponents, beginning with a resolution of the quantization of the exponents by means of 10 bits, the resolution is reduced in steps by one bit at a time whenever a variable that characterizes a quantization error is less than a predeterminable value.

17. Method according to one of Claims 12 to 16, wherein the input variable of the machine learning system is a variable that has been recorded by means of a sensor,
wherein, depending on an output variable of the machine learning system, a control variable is determined.

18. Computer program, which comprises commands which have the effect when performed on a computer of causing the latter to perform the method according to one of Claims 7 to 17.

19. Machine-readable storage element, on which the computer program according to Claim 18 is stored.

20. Machine learning system, obtainable by one of the methods according to one of Claims 13 to 16.


**Revendications**

1. Unité de calcul, qui est conçue pour effectuer une multiplication d'au moins deux multiplicandes (c, d), les multiplicandes (c, d) possédant respectivement un premier exposant $(\hat{c}, \hat{d})$ et une première base $(B_c, B_d)$,
les premières bases $(B_c, B_d)$ possédant respectivement une deuxième base, un deuxième et un troisième exposant $(z_c, z_d)$, comprenant :

   au moins une unité de décalage de bits, l'unité de décalage de bits décalant un nombre binaire d'un nombre de positions pouvant être prédéfini, notamment vers la gauche ;
   une unité arithmétique et une mémoire ;
   l'unité arithmétique effectuant une soustraction des troisièmes exposants $(z_c, z_d)$,
   l'unité de décalage de bits effectuant un premier décalage d'un nombre binaire de l'un des premiers exposants $(\hat{d})$ des multiplicandes (c, d) d'un nombre de positions d'une valeur des exposants soustraits $(z_d - z_c)$ et
   l'unité arithmétique effectuant une addition du résultat du premier décalage avec le premier exposant $(\hat{c})$ supplémentaire des multiplicandes (c, d),
   le résultat de l'addition étant séparé en une partie entière (angl. integer part) et une partie décimale (angl. fractional part) en fonction d'un plus petit exposant $(z_b)$ des troisièmes exposants $(z_c, z_d)$,
   un nombre binaire de la partie décimale étant lu depuis la mémoire, et
   l'unité de décalage de bits effectuant un deuxième décalage du nombre binaire de la partie décimale du nombre de positions de la valeur de la partie entière.

2. Unité de calcul selon la revendication 1, l'unité de décalage de bits effectuant le premier décalage au moyen d'un remplissage du côté droit avec une pluralité de « 0 » en fonction d'une valeur de la soustraction des troisièmes exposants $(z_c, z_d)$.

3. Unité de calcul selon l'une des revendications précédentes, la mémoire possédant au moins $2^n$ entrées, n étant égal au montant du plus petit exposant des troisièmes exposants $(z_c, z_d)$,
la part décimale étant utilisée comme adresse pour la lecture de la valeur binaire de la part décimale depuis la mémoire.

4. Unité de calcul selon l'une des revendications précédentes, l'unité de calcul comportant en outre une unité d'accumulation, laquelle accumule les résultats d'une pluralité des multiplications respectivement d'au moins deux multiplicandes.

5. Unité de calcul selon la revendication 4, l'unité d'accumulation étant réalisée par un arbre additionneur.

6. Unité de calcul selon l'une des revendications précédentes, une unité de conversion (411), notamment un codeur de priorité, convertissant le résultat du deuxième décalage en une représentation exponentielle.

7. Procédé (10) pour multiplier au moins deux multiplicandes (c, d) sur une unité de calcul, les multiplicandes (c, d) possédant respectivement un premier exposant $(\hat{c}, \hat{d})$ et une première base $(B_c, B_d)$,

les premières bases ($B_c$, $B_d$) possédant respectivement une deuxième base, un deuxième et un troisième exposant ($z_c$, $z_d$), comprenant les étapes suivantes :

- fourniture des premiers exposants ($\hat{c}$, $\hat{d}$) des multiplicandes (c, d) et des troisièmes exposants ($z_c$, $z_d$), chacun des exposants ($\hat{c}$, $\hat{d}$, $z_c$, $z_d$) fournis étant quantifié ;

- soustraction des troisièmes exposants ($z_c$, $z_d$) ;
- premier décalage d'un nombre binaire de l'un des premiers exposants ($\hat{d}$) des multiplicandes (c, d) d'un nombre de positions d'une valeur des exposants soustraits ($z_d$ - $z_c$) ;
- addition du résultat du premier décalage avec le premier exposant ($\hat{c}$) supplémentaire des multiplicandes (c, d) ;
- séparation du résultat de l'addition en une partie entière (angl. integer part) et une partie décimale (angl. fractional part) en fonction d'un plus petit exposant ($z_b$) des troisièmes exposants ($z_c$, $z_d$) ; et
- deuxième décalage d'un nombre binaire de la partie décimale du nombre de positions de la valeur de la partie entière.

8. Procédé selon la revendication 7, le nombre binaire de la partie décimale étant lu depuis une mémoire, notamment une table de correspondance, la partie décimale étant utilisée comme adresse de la mémoire pour la lecture du nombre binaire de la partie décimale.

9. Procédé selon l'une des revendications 7 ou 8, le résultat du deuxième décalage étant décomposé en un exposant et une base pouvant être prédéfinie.

10. Procédé selon l'une des revendications 7 à 9, chacune des deuxièmes bases possédant la valeur deux et chacun des deuxièmes exposants la valeur deux.

11. Procédé selon l'une des revendications 7 à 10, les exposants fournis étant représentés au moyen d'un maximum de 10 bits.

12. Procédé pour faire fonctionner un système d'apprentissage automatique, une pluralité de paramètres et de grandeurs intermédiaires du système d'apprentissage automatique étant respectivement stockés en tant que multiplicandes dans une mémoire au moyen de la représentation exponentielle, des multiplications des multiplicandes stockés étant effectuées selon l'un des procédés des revendications 7 à 11.

13. Procédé selon la revendication 12, au moins les bases de la représentation exponentielle des grandeurs intermédiaires et des paramètres étant déterminées lors de l'entraînement du système d'apprentissage automatique.

14. Procédé selon la revendication 12, au moins les bases pour la représentation exponentielle des grandeurs intermédiaires et des paramètres du système d'apprentissage automatique étant déterminées après l'entraînement du système d'apprentissage automatique.

15. Procédé selon la revendication 13 ou 14, les bases étant déterminées en fonction d'une erreur de quantification propagée, l'erreur de quantification propagée caractérisant une différence entre le résultat de la multiplication de deux multiplicandes avec des exposants quantifiés et un résultat de la multiplication de ces deux multiplicandes, notamment avec des exposants réels.

16. Procédé selon l'une des revendications 13 à 15, les exposants étant déterminés en fonction de la base déterminée de la représentation exponentielle et les exposants déterminés étant quantifiés, lors de la quantification des exposants, en commençant par une résolution et une quantification des exposants au moyen de 10 bits, la résolution étant réduite graduellement à chaque fois d'un bit, ensuite lorsqu'une grandeur qui caractérise une erreur de quantification est inférieure à une grandeur pouvant être prédéfinie.

17. Procédé selon l'une des revendications 12 à 16, la grandeur d'entrée du système d'apprentissage automatique étant une grandeur qui a été acquise au moyen d'un capteur, une grandeur de commande étant déterminée en fonction d'une grandeur de sortie du système d'apprentissage automatique.

**18.** Programme informatique, lequel comporte des instructions qui, lors de l'exécution sur un ordinateur, amènent celui-ci à mettre en œuvre le procédé selon l'une des revendications 7 à 17.

**19.** Élément de mémoire lisible par machine sur lequel est stocké le programme informatique selon la revendication 18.

**20.** Système d'apprentissage automatique, pouvant être obtenu par l'un des procédés selon l'une des revendications 13 à 16.

10

```
┌─────────────────────┐
│         11          │
└─────────────────────┘
           │
           ▼
┌─────────────────────┐
│         12          │
└─────────────────────┘
           │
           ▼
┌─────────────────────┐
│         13          │
└─────────────────────┘
           │
           ▼
┌─────────────────────┐
│         14          │
└─────────────────────┘
           │
           ▼
┌─────────────────────┐
│         15          │
└─────────────────────┘
```

**Fig. 1**

20

```
┌─────────────────────────────┐
│             21              │
└─────────────────────────────┘
              │
              ▼
┌─────────────────────────────┐
│             22              │
└─────────────────────────────┘
              │
              ▼
┌─────────────────────────────┐
│             23              │
└─────────────────────────────┘
              │
              ▼
┌─────────────────────────────┐
│             24              │
└─────────────────────────────┘
              │
              ▼
┌─────────────────────────────┐
│             25              │
└─────────────────────────────┘
              │
              ▼
┌─────────────────────────────┐
│             26              │
└─────────────────────────────┘
```

**Fig. 2**

30

31

32

33

34

35

36

**Fig. 3**

**Fig. 4**

**Fig. 5**

**Fig. 6**

EP 3 811 199 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013220432 A1

**In der Beschreibung aufgeführte Nicht-Patentliteratur**

- **P. GYSEL et al.** *Hardware-oriented Approximation of Convolutional Neural Networks,* 2016, https://arxiv.org/pdf/1604.03168.pdf